(19) **Europäisches Patentamt / European Patent Office / Office européen des brevets**

(11) **EP 4 040 206 B1**

(12) **EUROPEAN PATENT SPECIFICATION**

(45) Date of publication and mention
of the grant of the patent:
**30.04.2025  Bulletin 2025/18**

(21) Application number: **20872864.2**

(22) Date of filing: **01.10.2020**

(51) International Patent Classification (IPC):
**G02B 7/02** (2021.01)      **G03B 15/00** (2021.01)
**G03B 17/02** (2021.01)      **H04N 23/57** (2023.01)
**G03B 3/02** (2021.01)       **G02B 7/04** (2021.01)
**G03B 17/12** (2021.01)      **G03B 43/00** (2021.01)
**H04N 23/55** (2023.01)

(52) Cooperative Patent Classification (CPC):
**G03B 17/12; G02B 7/021; G02B 7/023; G02B 7/04;
G03B 3/02; G03B 43/00; H04N 23/55; H04N 23/57**

(86) International application number:
**PCT/JP2020/037485**

(87) International publication number:
**WO 2021/066118 (08.04.2021 Gazette 2021/14)**

(54) **IMAGING DEVICE, MOVING BODY, AND IMAGING DEVICE MANUFACTURING METHOD**

BILDGEBUNGSVORRICHTUNG, BEWEGLICHER KÖRPER UND VERFAHREN ZUR HERSTELLUNG EINER BILDGEBUNGSVORRICHTUNG

DISPOSITIF D'IMAGERIE, CORPS MOBILE ET PROCÉDÉ DE FABRICATION DE DISPOSITIF D'IMAGERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.10.2019  JP 2019183285**

(43) Date of publication of application:
**10.08.2022  Bulletin 2022/32**

(73) Proprietor: **Kyocera Corporation
Kyoto-shi Kyoto 612-8501 (JP)**

(72) Inventors:
• **OHARA, Naoto**
  **Kyoto-shi, Kyoto 612-8501 (JP)**
• **HIRAOKA, Michiaki**
  **Kyoto-shi, Kyoto 612-8501 (JP)**
• **YAHAGI, Hiroto**
  **Kyoto-shi, Kyoto 612-8501 (JP)**
• **NAGOSHI, Keiichi**
  **Kyoto-shi, Kyoto 612-8501 (JP)**
• **HIRAISHI, Akihiko**
  **Kyoto-shi, Kyoto 612-8501 (JP)**

(74) Representative: **Viering, Jentschura & Partner mbB
Patent- und Rechtsanwälte
Am Brauhaus 8
01099 Dresden (DE)**

(56) References cited:
JP-A- 2009 229 589      JP-A- 2009 229 589
JP-A- 2011 171 866      JP-A- 2013 198 083
JP-A- 2013 198 083      US-A1- 2016 274 326

## Description

The present application claims priority from Japanese Patent Application No. 2019-183285 filed in the Japan Patent Office on October 3, 2019.

Technical Field

The present disclosure relates to an imaging device, a mobile object, and a method for manufacturing an imaging device.

Background Art

PTL 1 discloses a method for performing focus adjustment based on a thickness of a spacer inserted between an attachment reference surface for an imaging element and the imaging element. PTL 2 discloses a camera module comprising: a solid state imaging device mounted to a substrate; the barrel which holds a lens for forming a subject image on the solid state imaging device; and the holder which holds the barrel on the substrate to fix the position of the lens with respect to the solid state imaging device. The barrel and the holder are fixed to each other via a thermosensitive double-side adhesive film. PTL 3 discloses an imaging device constituted of a lens, an imaging device receiving the incident light and converting the incident light to be an electrical signal, a cylindrical member accommodating the lens, a holder holding the imaging device, a groove formed of an outer periphery surface of the cylindrical member and an inner periphery surface of the holder, an adhesive provided in the groove with the outer periphery surface and the inner periphery surface being contacted with each other, and an anchor mechanism provided in the groove. PTL 4 discloses a camera device composed of an image pickup lens, an image pickup element, a lens holding member, a circuit board, and screws. A focal-distance holding member is provided between the image pickup element and the circuit board. Alternatively, a clearance may be provided between the image pickup element and the circuit board. The material of a lead frame of the image pickup element may be the same as that of the lens holding member. Preferably, a clearance X may be provided between the image pickup element and the circuit board. The material of the lead frame of the image pickup element is different from that of the lens holding member. If a linear expansion coefficient of the lens holding member is $\alpha1$ and that of the lead frame is $\alpha2$, $X=L1\times\alpha1/\alpha2$ is established.

Citation List

Patent Literature

PTL 1: Japanese Unexamined Patent Application Publication No. 2000-9982; PTL 2: JP 2013 198083 A; PTL 3: US 2016/274326 A1; PTL 4: JP 2011 171866 A

Summary of Invention

Embodiments of the present invention are defined by an imaging device according to claim 1, a mobile object according to claim 3, and a method for manufacturing according to claim 4.
A further embodiment is defined by an imaging device according to dependent claim 2.

Brief Description of Drawings

[Fig. 1] Fig. 1 is a block diagram illustrating an exemplary configuration of an imaging device according to an embodiment.
[Fig. 2] Fig. 2 is a sectional view illustrating an exemplary configuration of the imaging device according to the embodiment.
[Fig. 3A] Fig. 3A illustrates a rotational displacement caused by temperature variation in the imaging device according to the embodiment.
[Fig. 3B] Fig. 3B is a diagram used to describe a rotational displacement caused by temperature variation in the imaging device according to the embodiment.
[Fig. 4] Fig. 4 illustrates a rotation center of the imaging device according to the embodiment.
[Fig. 5] Fig. 5 is a graph showing the displacement of an optical axis in the imaging device according to the embodiment.
[Fig. 6] Fig. 6 is a flowchart of a method for manufacturing an imaging device according to the embodiment. Description of Embodiments

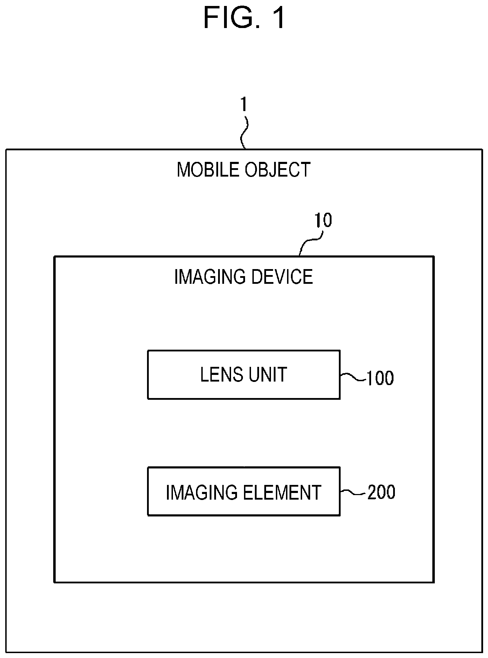

According to the method disclosed in PTL 1, when a substrate on which the imaging element is mounted and the spacer are fastened with screws to the attachment reference surface, a focus position may vary depending on the screw fastening force. In addition, an optical axis may tilt unless screws are fastened with equal force. Therefore, assembly needs to be carefully performed. An embodiment of the present disclosure provides an imaging device, a mobile object, and a method for manufacturing the imaging device with which focus adjustment can be facilitated and the displacement of the optical axis can be reduced.
An embodiment of the present disclosure will now be described with reference to the drawings. In the drawings, the same reference signs denote the same or similar components. The drawings referred to in the following description are schematic. Dimensional ratios in the drawings, for example, do not necessarily coincide with actual dimensional ratios.
As illustrated in Fig. 1, an imaging device 10 according to an embodiment of the present disclosure may be mounted in a mobile object 1. When the imaging device 10 is mounted in the mobile object 1, the imaging device 10 may capture an image of a subject in a space around the mobile object 1. The image captured by the imaging device 10 may be used, for example, to detect an object (human, vehicle, etc.) in the space around the mobile object 1.

Examples of the mobile object 1 may include a vehicle and an aircraft. Examples of the vehicle may include an automobile, an industrial vehicle, a railroad vehicle, a daily use vehicle, and a fixed-wing airplane that runs on a runway. Examples of the automobile may include a passenger vehicle, a truck, a bus, a two-wheel vehicle, and a trolley bus. Examples of the industrial vehicle may include an industrial vehicle for agriculture and an industrial vehicle for construction. Examples of the industrial vehicle may include a forklift and a golf cart. Examples of the industrial vehicle for agriculture may include a tractor, a cultivator, a transplanter, a binder, a combine, and a mower. Examples of the industrial vehicle for construction may include a bulldozer, a scraper, an excavator, a crane truck, a dump truck, and a road roller. The vehicle may be a vehicle driven by human force. The categories of the vehicle are not limited to those described above. For example, the automobile may be an industrial vehicle capable of running on a road. The same vehicle may belong to two or more categories. Examples of the aircraft may include a fixed-wing airplane and a rotary wing aircraft.

The imaging device 10 illustrated in Fig. 1 includes a lens unit 100 and an imaging element 200.

The lens unit 100 includes a plurality of optical members, such as lenses. The lenses included in the lens unit 100 may, for example, be lenses having a wide angle of view, such as fisheye lenses. The lens unit 100 focuses a subject image on a light-receiving surface of the imaging element 200.

The imaging element 200 includes, for example, a charge coupled device (CCD) image sensor or a complementary metal-oxide semiconductor (CMOS) image sensor. A plurality of pixels (light receiving elements) are arranged on the light-receiving surface of the imaging element 200. The imaging element 200 captures the subject image focused on the light-receiving surface and creates a captured image. The imaging device 10 may output the captured image to an external device mounted in the mobile object 1. The external device may be, for example, an electronic control unit (ECU), a display, or a navigation device. The imaging device 10 may have a function of performing a predetermined image process, such as a white balance adjustment process, an exposure adjustment process, or a gamma correction process, on the captured image.

In the example illustrated in Fig. 1, the imaging device 10 is a monocular camera including a single imaging system composed of the lens unit 100 and the imaging element 200. However, the imaging device 10 is not limited to this. The imaging device 10 may instead be a stereo camera that includes a plurality of imaging systems that cooperate with each other to capture images of a target from different visual points. When the imaging device 10 is a stereo camera, two lens units 100, for example, are disposed next to each other with an interval therebetween in a vehicle width direction of the mobile object 1 so that optical axes thereof are parallel to each other. Accordingly, the imaging systems capture images of substantially the same area from different visual points. The imaging device 10 may be fixed to, for example, a front bumper, a fender grille, a side fender, a light module, a hood, etc., of a vehicle.

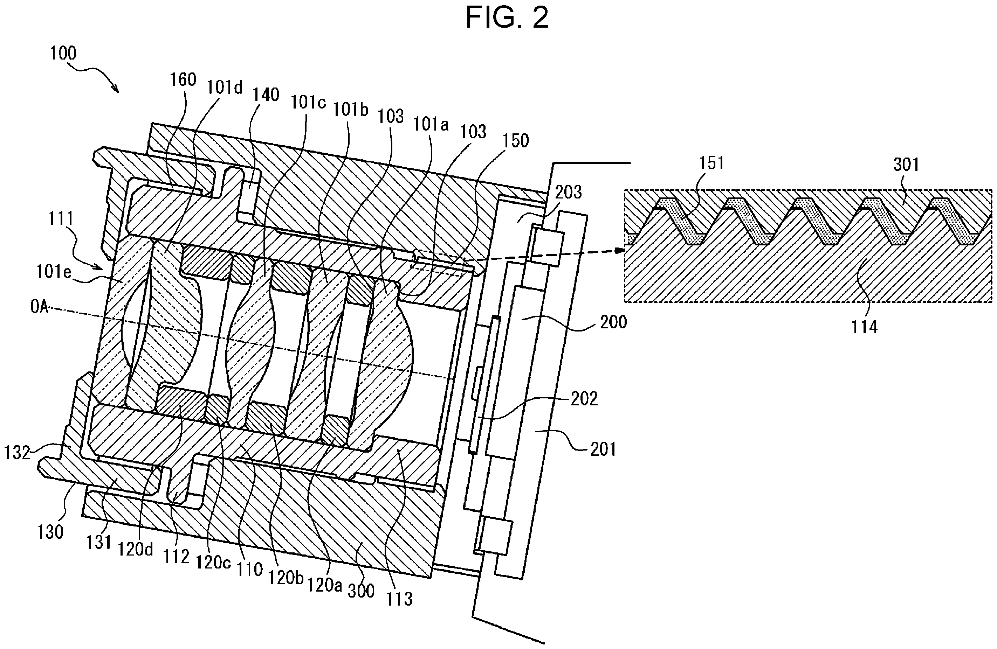

The structure of the imaging device 10 will now be described with reference to Fig. 2.

As illustrated in Fig. 2, the imaging device 10 includes the lens unit 100, the imaging element 200, and an imaging substrate 201 on which a housing 300 and the imaging element 200 are mounted.

The lens unit 100 includes a plurality of lenses 101a to 101e and a lens barrel 110, and possibly non-claimed spacing rings 120a to 120d and a non-claimed retainer 130. In the following description, the lenses 101a to 101e will be referred to as lenses 101 when they are not distinguished from each other. Also, the spacing rings 120a to 120d will be referred to as spacing rings 120 when they are not distinguished from each other.

The lenses 101a to 101e are arranged in the direction of an optical axis OA. In other words, the lenses 101a to 101e are arranged such that optical axes thereof coincide with the optical axis OA. In the following direction, a direction orthogonal to the optical axis direction in a plan view viewed in the optical axis direction will be referred to as a radial direction, and a direction that circulates around the optical axis direction will be referred to as a circumferential direction.

The lenses 101 may be made of a glass or a resin, such as polycarbonate (PC), cyclo-olefin polymer (COP), cyclo-olefin copolymer (COC), or poly(methyl methacrylate) (PMMA).

The lens barrel 110 is a cylindrical member having an opening 111 larger than the lenses 101a to 101e. The lens barrel 110 has an internal space in which the lenses 101 are contained and held. More specifically, the lens barrel 110 contains the lenses 101a to 101e such that the lens 101e, the lens 101d, the lens 101c, the lens 101b, and the lens 101a are arranged in that order from the opening 111. Thus, among the lenses 101, the lens 101e is closest to the opening 111. In addition, among the lenses 101, the lens 101a is at a side farthest from the opening 111 (hereinafter referred to as "bottom"). The lens barrel 110 contains the lenses 101 such that the central axis of the lens barrel 110 coincides with the optical axis OA. The lens barrel 110 may be made of, for example, aluminum or stainless steel.

The lens barrel 110 has a thread groove 114 in the outer periphery thereof. The housing 300 has a threaded portion (thread crest) 301 configured to engage with the thread groove 114 in the outer periphery of the lens barrel 110. The imaging device 10 includes an adhesive member 151 positioned between the thread groove 114 in the outer periphery of the lens barrel 110 and the threaded portion 301 of the housing 300. More specifically, the lens barrel 110 is accommodated in the housing 300 and screw fastened to the housing 300, possibly at a non-claimed first fixing section 150. The threaded portion 301 is formed on an inner peripheral surface of an accommodation space of the housing 300 that accommodates the lens barrel 110 at a position corresponding to the first fixing section 150. In addition, a thread groove 114 that engages with the threaded portion 301 is formed in an outer peripheral surface of the lens barrel 110 at a position corresponding to the first fixing section 150. The adhesive member 151 is applied to at least one of the threaded portion 301 on the inner peripheral surface of the accommodation space of the housing 300 and the thread groove 114 in the outer peripheral surface of the lens barrel 110. The adhesive member 151 is, for example, an adhesive having a small coefficient of linear expansion.

By inserting the lens barrel 110 into the accommodation space of the housing 300 while rotating the lens barrel 110 in the circumferential direction, the lens barrel 110 can be screwed into the accommodation space of the housing 300 such that the threaded portion 301 on the inner peripheral surface of the accommodation space of the housing 300 engages with the thread groove 114 in the outer peripheral surface of the lens barrel 110. The lens barrel 110 and the housing 300 are fixed by adhesion while the position of the lens barrel 110 is adjusted such that the lenses 101 focus the subject image on the light-receiving surface of the imaging element 200. When the adhesive member 151 is a thermosetting adhesive, the thermosetting adhesive is cured to fix the lens barrel 110 and the housing 300.

According to a non-claimed example, a filter 202 is positioned between the lens unit 100 and the imaging element 200. The filter 202 may be, for example, an ultraviolet (UV)/infrared (IR) cut filter, a color filter, or a low-pass filter. The filter 202 may instead be a glass plate having an antireflection (AR) coating. The filter 202 is supported by a support portion 203. The support portion 203 supports the filter 202. The support portion 203 has a sealing structure so that no foreign matter adheres to the light-receiving surface of the imaging element 200.

A first projecting portion 112 that projects radially outward is formed on the outer peripheral surface of the lens barrel 110. The first projecting portion 112 is in contact with the housing 300 with a wave washer 140 provided therebetween when the lens unit 100 is accommodated in the housing 300. When the lens barrel 110 is inserted into the accommodation space of the housing 300, the wave washer 140 is pressed and urged by the first projecting portion 112 of the lens barrel 110 in the direction in which the lens barrel 110 is inserted. When the lens barrel 110 is rotated for position adjustment, it may be difficult to perform fine adjustment due to backlash. The backlash can be reduced by placing the wave washer 140 that is pressed and urged between the first projecting portion 112 of the lens barrel 110 and the housing 300.

According to a non-claimed example, a second projecting portion 113 that projects radially inward is provided on an inner peripheral surface of the lens barrel 110 at the bottom of the lens barrel 110. The second projecting portion 113 of the lens barrel 110 has an inner diameter less than the outer diameter of the lens 101a closest to the bottom. Accordingly, the second projecting portion 113 serves as a holder that holds the lens 101a.

The spacing rings 120 are annular members having an outer diameter substantially equal to the inner diameter of the lens barrel 110 and an inner diameter substantially equal to the outer diameter of a lens portion of each lens 101 described below. The spacing rings 120 serve as holders that hold the lenses 101 in the lens barrel 110. The spacing rings 120 also serve as spacers that adjust the distances between the lenses 101 in the optical axis direction.

The spacing ring 120a is positioned between an object-side surface (surface adjacent to the opening 111) of the lens 101a and an image-side surface (surface adjacent to the bottom) of the lens 101b. The spacing ring 120b is positioned between an object-side surface of the lens 101b and an image-side surface of the lens 101c. The spacing ring 120c is positioned on an object-side surface of the lens 101c. The spacing ring 120d is positioned between the spacing ring 120c and an image-side surface of the lens 101d. The lens 101e is positioned in contact with an object-side surface of the lens 101d. The intervals between the lenses 101 contained in the lens barrel 110 in the optical axis direction are adjusted by the spacing rings 120a to 120d.

As described above, the lens barrel 110 has the opening 111 larger than the outer diameters of the lenses 101. In addition, the second projecting portion 113, which projects radially inward and which is capable of holding the lens 101a closest to the bottom, is provided on the inner peripheral surface of the lens barrel 110 at the bottom of the lens barrel 110. Accordingly, the lens 101a, the spacing ring 120a, the lens 101b, the spacing ring 120b, the lens 101c, the spacing ring 120c, the spacing ring 120d, the lens 101d, and the lens 101e are inserted into the lens barrel 110 through the opening 111 in that order.

The retainer 130, which serves as a holding member, is in contact with the lens 101e, which is one of the lenses 101 that is closest to the opening 111, and thereby holds the lenses 101 from the side adjacent to the opening 111. The retainer 130 includes an outer peripheral portion 131 and a contact portion 132.

The outer peripheral portion 131 is fixed to the outer peripheral surface of the lens barrel 110. For example, as illustrated in Fig. 2, the outer peripheral portion 131 is fixed to the outer peripheral surface of the lens barrel 110 at a second fixing section 160, which is closer to the opening 111 than the first projecting portion 112. The outer peripheral portion 131 is, for example, fixed by being screwed onto the lens barrel 110. In this case, for example, a thread crest is formed on the outer peripheral surface of the lens barrel 110 at a position corresponding to the second fixing section 160. In addition, a thread groove that engages with the thread crest formed on the outer peripheral surface of the lens barrel 110 is formed in an inner peripheral surface of the outer peripheral portion 131 at a position corresponding to the second fixing section 160. The retainer 130 is fixed to the outer peripheral surface of the lens barrel 110 by pushing the retainer 130 into the housing 300 in the optical axis direction while rotating the retainer 130 in the circumferential direction.

The contact portion 132 extends radially inward from an end portion of the outer peripheral portion 131 adjacent to the opening 111. When the retainer 130 is fixed to the outer peripheral surface of the lens barrel 110, the contact portion 132 is in contact with the lens 101e closest to the opening 111 and holds the lenses 101 in the optical axis direction.

The imaging element 200 captures the subject image incident thereon through the lens 101. The housing 300 holds the imaging element 200.

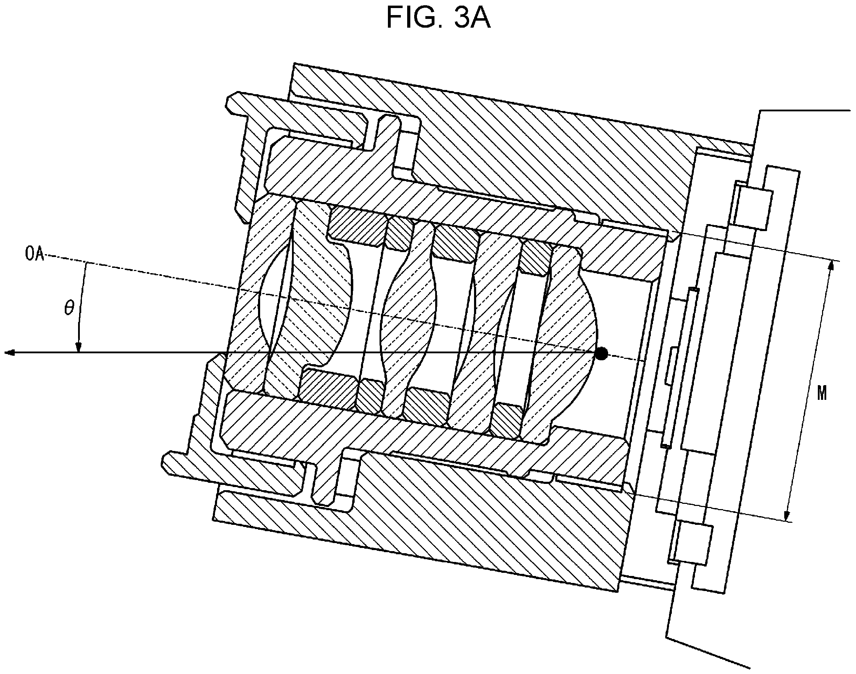

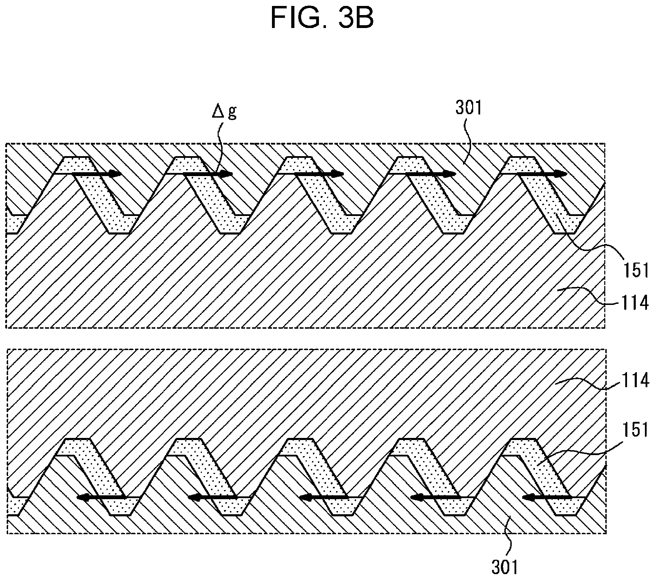

A rotational displacement caused by thermal expansion or contraction of the adhesive member 151 due to temperature variation will now be described with reference to Figs. 3A and 3B. The adhesive member 151 expands or contracts in response to temperature variation. An amount of rotational displacement (lens rotation angle) $\theta$ of the lens unit 100 due to temperature variation may be determined by using an amount of thermal expansion or contraction $\Delta g$ of the adhesive member 151 and a nominal screw diameter M as in Expression (1) given below.
[Math. 1]

$$\theta = \tan^{-1} \frac{\Delta g}{M/2} \qquad (1)$$

According to a non-claimed example, the nominal diameter (outer diameter of the lens barrel 110) M is assumed to be 12 mm, and the amount of thermal expansion or contraction $\Delta g$ is assumed to be 0.0022 mm. In this case, according to Expression (1), the lens rotation angle $\theta$ is 0.021 degrees. Accordingly, when the adhesive member 151 thermally expands or contracts, the lens unit 100 may tilt by 0.021 degrees at a maximum. Fig. 3B is an enlarged view of the first fixing section 150. Assuming the worst case, a screw clearance in a state of screw abutment illustrated in Fig. 3B is used in the calculation. However, such a case is unlikely because suppression of the rotation occurs in practice.

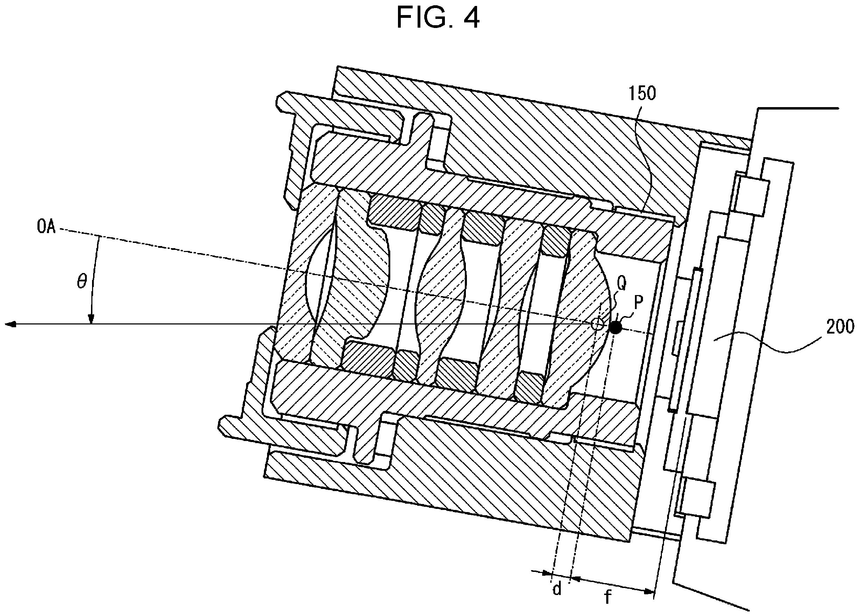

Referring to Fig. 4, in the present example, a distance f from a sensor surface of the imaging element 200 to an image-side principal point P is 4.28 mm in terms of an air conversion distance. A screw fastening position of the first fixing section 150 (position at which the lens barrel 110 and the housing 300 are fixed by adhesion) may be regarded as a rotation center Q of the lens unit 100. The rotation center is ideally at the image-side principal point P. This is because the focus position does not change when the image-side principal point P is the rotation center. Assuming the worst case where the screw fastening position of the first fixing section 150 is at an end of a screw engagement portion, a distance d between the image-side principal point P and the rotation center Q is 1.628 mm. Assume that the lens rotation angle $\theta$ due to temperature variation is 0.021 degrees.

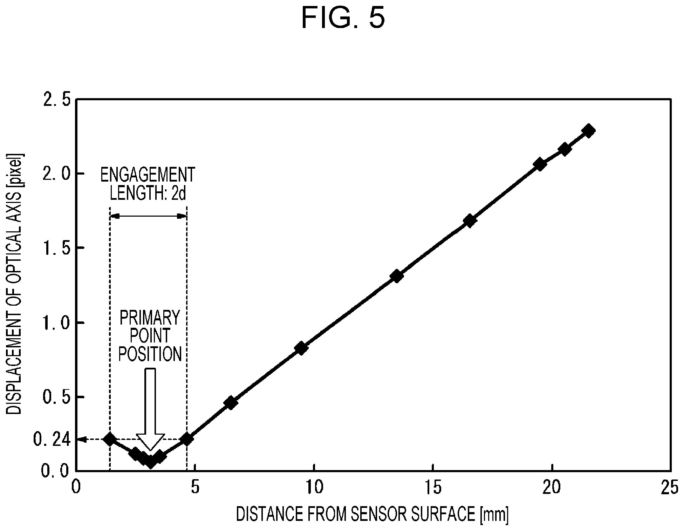

Fig. 5 shows the displacement of the optical axis caused when the lens rotation angle $\theta$ due to temperature variation of the adhesive member 151 is 0.021 degrees. The horizontal axis represents the distance from the sensor surface of the imaging element 200 to the rotation center Q. The vertical axis represents the displacement of the optical axis. As is clear from Fig. 5, the displacement of the optical axis is small when the screw fastening position of the first fixing section 150 (that is, the rotation center Q) is close to the image-side principal point P. Therefore, as illustrated in Figs. 2 and 4, the thread groove 114 formed in the outer periphery of the lens barrel 110 at the first fixing section 150 is provided in a range including a position at which a principal plane of the optical system including the lenses 101 (plane extending through the image-side principal point P and perpendicular to the optical axis OA) crosses the outer periphery of the lens barrel 110.

For example, the image-side surface of the lens 101a, which is one of the lenses 101 that is closest to the imaging element 200, may be positioned in a range along the optical axis OA of the lenses 101 corresponding to a range in which the thread groove 114 in the outer periphery of the lens barrel 110 and the threaded portion 301 of the housing 300 engage with each other. In such a case, the rotation center Q may be positioned close to the image-side principal point P, and the displacement of the optical axis can be reduced. Referring to the graph of Fig. 5, even when, for example, the distance d between the image-side principal point P and the rotation center Q is 1.628 mm as described above, the displacement of the optical axis is as small as 0.24 pixels. When binocular lenses are used, the displacement of the optical axis is calculated as 0.034 pixels based on the mean square of two displacements of 0.24 pixels.

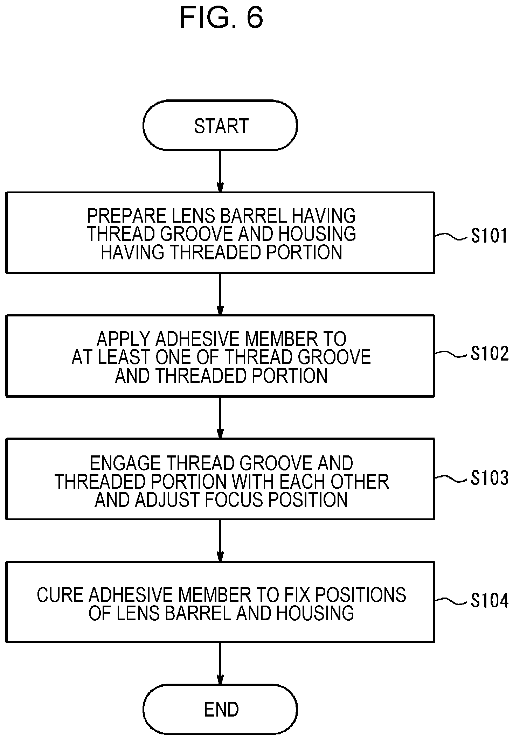

A method for manufacturing the imaging device 10 will now be described with reference to Fig. 6.

In step S101, the lens barrel 110 in which the lenses 101 are held and that has the thread groove 114 in the cylindrical outer periphery thereof is prepared. In addition, the housing 300 having the threaded portion 301 configured to engage with the thread groove 114 is prepared. The thread groove 114 is provided at a position at which the principal plane of the optical system including the lenses 101 crosses the outer periphery of the lens barrel 110.

In step S102, the adhesive member 151 is applied to at least one of the thread groove 114 and the threaded portion 301.

In step S103, the thread groove 114 and the threaded portion 301 are engaged with each other and the focus position is adjusted. The image-side surface of the lens 101a closest to the imaging element 200 is positioned in the range along the optical axis OA of the lenses 101 corresponding to the range in which the thread groove 114 in the outer periphery of the lens barrel 110 and the threaded portion 301 of the housing 300 engage with each other.

In step S104, the adhesive member 151 is cured to fix the positions of the lens barrel 110 and the housing 300.

As described above, according to the present embodiment, the imaging device 10 includes the lens barrel 110 in which the lenses 101 are held and that has the thread groove 114 in the cylindrical outer periphery thereof. The imaging device 10 also includes the housing 300 that holds the imaging element 200 and that has the threaded portion 301 configured to engage with the thread groove 114 in the outer periphery of the lens barrel 110. Accordingly, the lens barrel 110 can be inserted into the accommodation space in the housing 300 such that the threaded portion 301 and the thread groove 114 engage with each other. Therefore, focus adjustment can be facilitated.

In addition, in the present embodiment, the thread groove 114 in the outer periphery of the lens barrel 110 may be provided in a range including the position at which the principal plane of the optical system including the lenses 101 crosses the outer periphery of the lens barrel 110. In addition, the image-side surface of the lens 101a that is closest to the imaging element 200 may be positioned in the range along the optical axis OA of the lenses 101 corresponding to the range in which the thread groove 114 and the threaded portion 301 engage with each other. According to the above-described structure, the rotation center Q may be positioned close to the image-side principal point P, so that the displacement of the optical axis can be reduced.

Although typical examples have been described in the embodiment, it is obvious to those skilled in the art that various alterations and replacements are possible within the scope of the present claims. Therefore, the present invention is not to be regarded as being limited to the above-described embodiment, and various modifications and alterations are possible without departing from the scope of the claims.

Terms such as "first" and "second" in the present disclosure are identifiers for distinguishing components. Components distinguished by terms such as "first" and "second" in the present disclosure may have their numbers interchanged with each other. For example, the identifier "first" of the first optical member and the identifier "second" of the second optical member may be interchanged with each other. The identifiers are interchanged with each other simultaneously. The components are distinguishable even after their identifiers are interchanged. The identifiers may be omitted. Components whose identifiers are omitted are distinguished by reference signs. Description of identifiers such as "first" and "second" in the present disclosure alone should not be used for interpretation of the order of components or as basis for assuming that identifiers of smaller numbers are present. Reference Signs List

1 mobile object
10 imaging device
100 lens unit
101, 101a, 101b, 101c, 101d, 101e lens
102 lens portion
103 flat portion
110 lens barrel
111 opening
112 first projecting portion
113 second projecting portion (holder)
114 thread groove
120, 120a, 120b, 120c, 120d spacing ring (holder)
130 retainer (holding member)
131 outer peripheral portion
132 holding portion
140 wave washer
150 first fixing section
151 adhesive member
160 second fixing section
200 imaging element
201 imaging substrate
202 filter
203 support portion
300 housing
301 threaded portion

**Claims**

1. An imaging device (10) comprising:

   a lens barrel (110) in which a plurality of lenses (101, 101a, 101b, 101c, 101d, 101e) are held and that has a thread groove (114) in a cylindrical outer periphery of the lens barrel (110), wherein a projecting portion (112) that projects radially outward is formed on an outer peripheral surface of the lens barrel (110);
   an imaging element (200) that captures a subject image incident on the imaging element (200) through the plurality of lenses (101, 101a, 101b, 101c, 101d, 101e);
   a housing (300) that holds the imaging element (200) and that includes a threaded portion (301) configured to engage with the thread groove (114) in the cylindrical outer periphery of the lens barrel (110); and
   an adhesive member (151) positioned between the thread groove (114) in the cylindrical outer periphery of the lens barrel (110) and the threaded portion (301) of the housing (300),
wherein the thread groove (114) is provided in a range that includes a position at which a principal plane of an optical system including the plurality of lenses crosses the cylindrical outer periphery of the lens barrel (110), the optical system comprising the plurality of lenses (101, 101a, 101b, 101c, 101d, 101e),
wherein the projecting portion (112) is in contact with the housing (300) with a wave washer (140) provided therebetween, and
wherein the wave washer (140) is configured to be pressed and urged by the projecting portion (112) of the lens barrel (110) in the direction in which the lens barrel (110) is inserted, when the lens barrel (110) is inserted into the housing (300).

2. The imaging device (10) according to Claim 1, wherein an image-side surface of one lens of the plurality of lenses (101, 101a, 101b, 101c, 101d, 101e) that is closest to the imaging element (200) is positioned in a lens range in an optical axis of the lenses (101, 101a, 101b, 101c, 101d, 101e), wherein the lens range corresponds to a range in which the thread groove (114) in the outer periphery of the lens barrel (110) and the threaded portion (301) of the housing (300) engage with each other.

3. A mobile object (1) comprising the imaging device (10) according to Claim 1 or 2, wherein the imaging device (10) is mounted to the mobile object (1).

4. A method for manufacturing an imaging device (10), the method comprising:

preparing a lens barrel (110) in which a plurality of lenses (101, 101a, 101b, 101c, 101d, 101e) are held and that has a thread groove (114) in a cylindrical outer periphery thereof, wherein a projecting portion (112) that projects radially outward is formed on an outer peripheral surface of the lens barrel (110), and a housing (300) including a threaded portion (301) configured to engage with the thread groove (114) in the outer periphery of the lens barrel (110);
applying an adhesive member (151) to at least one of the thread groove (114) and the threaded portion (301);
adjusting a focus position by engaging the thread groove (114) and the threaded portion (301) with each other; and fixing positions of the lens barrel (110) and the housing (300) by curing the adhesive member (151),
wherein the thread groove (114) is provided at a position at which a principal plane of an optical system including the plurality of lenses (101, 101a, 101b, 101c, 101d, 101e) crosses the outer periphery of the lens barrel (110), and
wherein, when the lens barrel (110) is inserted into the housing (300), a wave washer (140) is pressed and urged by the projecting portion (112) of the lens barrel (110) in the direction in which the lens barrel (110) is inserted and the projecting portion (112) is in contact with the housing (300) with the wave washer (140) provided therebetween.

**Patentansprüche**

1. Abbildungsvorrichtung (10), aufweisend:

einen Linsentubus (110), in dem eine Mehrzahl von Linsen (101, 101a, 101b, 101c, 101d, 101e) gehalten sind und der eine Gewindenut (114) in einem zylindrischen Außenumfang des Linsentubus (110) aufweist, wobei ein Vorsprungsabschnitt (112), der radial nach außen hervorsteht, an einer Außenumfangsfläche des Linsentubus (110) ausgebildet ist,
ein Abbildungselement (200), das ein durch die Mehrzahl von Linsen (101, 101a, 101b, 101c, 101d, 101e) auf das Abbildungselement (200) einfallendes Objektbild erfasst,
ein Gehäuse (300), das das Abbildungselement (200) hält und das einen Gewindeabschnitt (301) aufweist, der konfiguriert ist, um mit der Gewindenut (114) in dem zylindrischen Außenumfang des Linsentubus (110) in Eingriff zu sein, und
ein Klebeelement (151), das zwischen der Gewindenut (114) in dem zylindrischen Außenumfang des Linsentubus (110) und dem Gewindeabschnitt (301) des Gehäuses (300) angeordnet ist,
wobei die Gewindenut (114) in einem Bereich bereitgestellt ist, der eine Position aufweist, an der eine Hauptebene eines optischen Systems, das die Mehrzahl von Linsen aufweist, den zylindrischen Außenumfang des Linsentubus (110) kreuzt, wobei das optische System die Mehrzahl von Linsen (101, 101a, 101b, 101c, 101d, 101e) aufweist,
wobei der Vorsprungsabschnitt (112) mit dem Gehäuse (300) in Kontakt ist, wobei eine Wellenscheibe (140) dazwischen bereitgestellt ist, und
wobei die Wellenscheibe (140) konfiguriert ist, um durch den Vorsprungsabschnitt (112) des Linsentubus (110) in die Richtung, in der der Linsentubus (110) eingesetzt wird, gedrückt und gedrängt zu werden, wenn der Linsentubus (110) in das Gehäuse (300) eingesetzt wird.

**2.** Abbildungsvorrichtung (10) gemäß Anspruch 1, wobei eine bildseitige Fläche einer Linse der Mehrzahl von Linsen (101, 101a, 101b, 101c, 101d, 101e), die dem Abbildungselement (200) am nächsten ist, in einem Linsenbereich in einer optischen Achse der Linsen (101, 101a, 101b, 101c, 101d, 101e) positioniert ist, wobei der Linsenbereich mit einem Bereich korrespondiert, in dem die Gewindenut (114) im Außenumfang des Linsentubus (110) und der Gewindeabschnitt (301) des Gehäuses (300) miteinander in Eingriff sind.

**3.** Mobiles Objekt (1), aufweisend die Abbildungsvorrichtung (10) gemäß Anspruch 1 oder 2, wobei die Abbildungsvorrichtung (10) an dem mobilen Objekt (1) montiert ist.

**4.** Verfahren zum Herstellen einer Abbildungsvorrichtung (10), wobei das Verfahren aufweist:

Bereitstellen eines Linsentubus (110), in dem eine Mehrzahl von Linsen (101, 101a, 101b, 101c, 101d, 101e) gehalten sind und der eine Gewindenut (114) in einem zylindrischen Außenumfang davon aufweist, wobei ein Vorsprungsabschnitt (112), der radial nach außen hervorsteht, an einer Außenumfangsfläche des Linsentubus (110) ausgebildet ist, und eines Gehäuses (300), das einen Gewindeabschnitt (301) aufweist, der konfiguriert ist, um mit der Gewindenut (114) in dem Außenumfang des Linsentubus (110) in Eingriff zu sein,
Aufbringen eines Klebeelements (151) auf mindestens eines von der Gewindenut (114) und dem Gewindeabschnitt (301),
Einstellen einer Fokusposition durch in-Eingriff-Bringen der Gewindenut (114) und des Gewindeabschnitts (301) miteinander, und
Fixieren von Positionen des Linsentubus (110) und des Gehäuses (300) durch Aushärten des Klebeelements (151),
wobei die Gewindenut (114) an einer Position bereitgestellt ist, an der eine Hauptebene eines optischen Systems, das die Mehrzahl von Linsen (101, 101a, 101b, 101c, 101d, 101e) aufweist, den Außenumfang des Linsentubus (110) kreuzt, und
wobei, wenn der Linsentubus (110) in das Gehäuse (300) eingesetzt wird, eine Wellenscheibe (140) durch den Vorsprungsabschnitt (112) des Linsentubus (110) in die Richtung gedrückt und gedrängt wird, in der der Linsentubus (110) eingesetzt wird, und der Vorsprungsabschnitt (112) mit dem Gehäuse (300) in Kontakt ist, wobei die Wellenscheibe (140) dazwischen bereitgestellt ist.

**Revendications**

**1.** Dispositif d'imagerie (10) comprenant :

un barillet de lentille (110) dans lequel une pluralité de lentilles (101, 101a, 101b, 101c, 101d, 101e) sont maintenues et qui comporte une rainure de filetage (114) dans une périphérie extérieure cylindrique du barillet de lentille (110), dans lequel une partie en saillie (112) qui fait saillie radialement vers l'extérieur est formée sur une surface périphérique extérieure du barillet de lentille (110) ;
un élément d'imagerie (200) qui capture une image de sujet incidente sur l'élément d'imagerie (200) à travers la pluralité de lentilles (101, 101a, 101b, 101c, 101d, 101e) ;
un boîtier (300) qui maintient l'élément d'imagerie (200) et qui comprend une partie filetée (301) configurée pour venir en prise avec la rainure de filetage (114) dans la périphérie extérieure cylindrique du barillet de lentille (110) ; et
un élément adhésif (151) positionné entre la rainure de filetage (114) dans la périphérie extérieure cylindrique du barillet de lentille (110) et la partie filetée (301) du boîtier (300),
dans lequel la rainure de filetage (114) est prévue dans une plage qui comprend une position à laquelle un plan principal d'un système optique comprenant la pluralité de lentilles croise la périphérie extérieure cylindrique du barillet de lentille (110), le système optique comprenant la pluralité de lentilles (101, 101a, 101b, 101c, 101d, 101e),
dans lequel la partie en saillie (112) est en contact avec le boîtier (300) avec une rondelle ondulée (140) prévue entre eux, et
dans lequel la rondelle ondulée (140) est configurée pour être pressée et poussée par la partie en saillie (112) du barillet de lentille (110) dans la direction dans laquelle le barillet de lentille (110) est inséré, lorsque le barillet de lentille (110) est inséré dans le boîtier (300).

**2.** Dispositif d'imagerie (10) selon la revendication 1, dans lequel une surface côté image d'une lentille de la pluralité de lentilles (101, 101a, 101b, 101c, 101d, 101e) qui est la plus proche de l'élément d'imagerie (200) est positionnée dans une plage de lentille dans un axe optique des lentilles (101, 101a, 101b, 101c, 101d, 101e), dans lequel la plage de lentille correspond à une plage dans laquelle la rainure de filetage (114) dans la périphérie extérieure du barillet de lentille (110) et la partie filetée (301) du boîtier (300) sont en prise l'une avec l'autre.

**3.** Objet mobile (1) comprenant le dispositif d'imagerie (10) selon la revendication 1 ou 2, dans lequel le

**EP 4 040 206 B1**

dispositif d'imagerie (10) est monté sur l'objet mobile (1).

4. Procédé de fabrication d'un dispositif d'imagerie (10), le procédé comprenant :

la préparation d'un barillet de lentille (110) dans lequel une pluralité de lentilles (101, 101a, 101b, 101c, 101d, 101e) sont maintenues et qui comporte une rainure de filetage (114) dans une périphérie extérieure cylindrique de celui-ci, dans lequel une partie en saillie (112) qui fait saillie radialement vers l'extérieur est formée sur une surface périphérique extérieure du barillet de lentille (110), et d'un boîtier (300) comprenant une partie filetée (301) configurée pour venir en prise avec la rainure de filetage (114) dans la périphérie extérieure du barillet de lentille (110) ;

l'application d'un élément adhésif (151) sur au moins l'une de la rainure de filetage (114) et de la partie filetée (301) ;

l'ajustement d'une position de mise au point en mettant en prise la rainure de filetage (114) et la partie filetée (301) l'une avec l'autre ; et

la fixation de positions du barillet de lentille (110) et du boîtier (300) en durcissant l'élément adhésif (151),

dans lequel la rainure de filetage (114) est prévue à une position à laquelle un plan principal d'un système optique comprenant la pluralité de lentilles (101, 101a, 101b, 101c, 101d, 101e) croise la périphérie extérieure du barillet de lentille (110), et

dans lequel, lorsque le barillet de lentille (110) est inséré dans le boîtier (300), une rondelle ondulée (140) est pressée et poussée par la partie en saillie (112) du barillet de lentille (110) dans la direction dans laquelle le barillet de lentille (110) est inséré et la partie en saillie (112) est en contact avec le boîtier (300), la rondelle ondulée (140) étant prévue entre eux.

FIG. 1

MOBILE OBJECT 1

IMAGING DEVICE 10

LENS UNIT ~100

IMAGING ELEMENT ~200

# FIG. 2

EP 4 040 206 B1

# FIG. 3A

EP 4 040 206 B1

# FIG. 3B

FIG. 4

# FIG. 5

# FIG. 6

```
┌─────────────┐
│    START    │
└─────────────┘
       │
       ▼
┌──────────────────────────────┐
│   PREPARE LENS BARREL HAVING │
│   THREAD GROOVE AND HOUSING   │── S101
│    HAVING THREADED PORTION    │
└──────────────────────────────┘
       │
       ▼
┌──────────────────────────────┐
│      APPLY ADHESIVE MEMBER TO │
│  AT LEAST ONE OF THREAD GROOVE│── S102
│      AND THREADED PORTION     │
└──────────────────────────────┘
       │
       ▼
┌──────────────────────────────┐
│     ENGAGE THREAD GROOVE AND  │
│ THREADED PORTION WITH EACH OTHER│── S103
│     AND ADJUST FOCUS POSITION │
└──────────────────────────────┘
       │
       ▼
┌──────────────────────────────┐
│ CURE ADHESIVE MEMBER TO FIX POSITIONS│── S104
│     OF LENS BARREL AND HOUSING│
└──────────────────────────────┘
       │
       ▼
┌─────────────┐
│     END     │
└─────────────┘
```

**EP 4 040 206 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019183285 A
- JP 2000009982 A
- JP 2013198083 A
- US 2016274326 A1
- JP 2011171866 A